# EUROPÄISCHE PATENTANMELDUNG

(11) **EP 4 844 266 A1**
(43) Veröffentlichungstag der Anmeldung: **25.11.2026**
(21) Anmeldenummer: 25177401.4
(22) Anmeldetag: 19.05.2025
(51) Int. Cl.: F21S 41/141, F21S 41/151, F21S 41/153, F21S 41/663, B60Q 1/00

(54) **BELEUCHTUNGSANORDNUNG FÜR EIN FAHRZEUG UND VERFAHREN ZUM BETREIBEN EINER BELEUCHTUNGSANORDNUNG**

(71) Anmelder: VOLKSWAGEN AG, 38440 Wolfsburg (DE)
(72) Erfinder: Kreipe, Bernhard, 38440 Wolfsburg (DE); Lampe, Sebastian, 38440 Wolfsburg (DE); Thiel, Alexander, 38440 Wolfsburg (DE)

(57) **Zusammenfassung**

Die Erfindung betrifft eine Beleuchtungsanordnung (1) für ein Fahrzeug, umfassend zwei Scheinwerfer (2) und eine Steuereinrichtung (8), wobei jeder der Scheinwerfer (2) als Lichtquellen zur Erzeugung einer Abblend- und/oder Fernlichtverteilung ausschließlich je ein hochaufgelöstes Lichtmodul (4) und je ein Zusatz-Lichtmodul (5) umfasst, wobei das hochaufgelöste Lichtmodul (4) in einem Raster angeordnete, einzeln und/oder gruppenweise ansteuerbare Lichtpunkte umfasst, wobei das Zusatz-Lichtmodul (5) ausschließlich ein, zwei oder drei Lichtelemente (6, 7, 9) umfasst, welche jeweils ausschließlich als Ganzes ansteuerbar sind, wobei jedes der Lichtelemente (6, 7, 9) und jedes der hochaufgelösten Lichtmodule (4) dazu eingerichtet ist, einen jeweils vorgegebenen Ausleuchtbereich (14-17) vor der Beleuchtungsanordnung (1) zu beleuchten, wobei ein erstes der Lichtelemente (6) dazu eingerichtet ist, den Ausleuchtbereich eines Abblendlichts zu beleuchten, und wobei die Steuereinrichtung (8) dazu eingerichtet ist, je nach einem Betriebszustand die Lichtelemente (6, 7, 9) und/oder Lichtpunkte derart anzusteuern, dass der jeweilige Ausleuchtbereich eines Abblendlichts und/oder eines Kurvenlichts und/oder eines Fernlichts und/oder eines Teilfernlichts beleuchtet wird und/oder eine hochaufgelöste Projektion bereitgestellt wird. Ferner betrifft die Erfindung ein Verfahren zum Betreiben einer solchen Beleuchtungsanordnung.

## Beschreibung

Die Erfindung betrifft eine Beleuchtungsanordnung für ein Fahrzeug und ein Verfahren zum Betreiben einer Beleuchtungsanordnung.

Fahrzeuge, insbesondere Kraftfahrzeuge, sind im Allgemeinen mit Scheinwerfern ausgestattet, welche dazu eingerichtet sind, verschiedene Lichtfunktionen, wie beispielsweise ein Abblendlicht und/oder ein Fernlicht, bereitzustellen. Die Scheinwerfer moderner Fahrzeuge umfassen dabei oft eine Vielzahl von komplexen Lichtmodulen, wie beispielsweise hochaufgelöste Lichtmodule oder Bi-Matrix-Module mit jeweils einer Vielzahl von jeweils einzeln ansteuerbaren Lichtelementen. Durch eine große Anzahl ansteuerbarer Lichtelemente können die Lichtmodule spezielle Lichtfunktionen bereitstellen. Allerdings sind moderne Scheinwerferanordnungen durch die große Anzahl an verschiedenen Lichtmodulen und/oder Lichtelementen verhältnismäßig komplex und es ergeben sich verhältnismäßig hohe Kosten.

Beleuchtungsanordnungen sind beispielsweise aus der DE 10 2007 060 399 A1, der US 11 585 509 B2, der WO 2024/261000 A1 und der EP 3 650 744 A1 bekannt.

Der Erfindung liegt die Aufgabe zu Grunde, eine Beleuchtungsanordnung für ein Fahrzeug und ein Verfahren zum Betreiben einer Beleuchtungsanordnung, insbesondere im Hinblick auf einen einfacheren Aufbau, zu verbessern, wobei mit der Lösung insbesondere eine große Vielfalt an möglichen Lichtfunktionen bereitgestellt werden soll.

Die Aufgabe wird erfindungsgemäß durch eine Beleuchtungsanordnung mit den Merkmalen des Patentanspruchs 1 und ein Verfahren mit den Merkmalen des Patentanspruchs 15 gelöst. Vorteilhafte Ausgestaltungen der Erfindung ergeben sich aus den Unteransprüchen.

Insbesondere wird eine Beleuchtungsanordnung für ein Fahrzeug geschaffen, umfassend zwei Scheinwerfer und eine Steuereinrichtung, wobei jeder der Scheinwerfer als Lichtquellen zur Erzeugung einer Abblend- und/oder Fernlichtverteilung ausschließlich je ein hochaufgelöstes Lichtmodul und je ein Zusatz-Lichtmodul umfasst, wobei das hochaufgelöste Lichtmodul in einem Raster angeordnete, einzeln und/oder gruppenweise ansteuerbare Lichtpunkte umfasst, wobei das Zusatz-Lichtmodul ausschließlich ein, zwei oder drei Lichtelemente umfasst, welche jeweils ausschließlich als Ganzes ansteuerbar sind, wobei jedes der Lichtelemente und jedes der hochaufgelösten Lichtmodule dazu eingerichtet ist, einen jeweils vorgegebenen Ausleuchtbereich vor der Beleuchtungsanordnung zu beleuchten, wobei ein erstes der Lichtelemente dazu eingerichtet ist, den Ausleuchtbereich eines Abblendlichts zu beleuchten, und wobei die Steuereinrichtung dazu eingerichtet ist, je nach einem Betriebszustand die Lichtelemente und/oder Lichtpunkte derart anzusteuern, dass der jeweilige Ausleuchtbereich eines Abblendlichts und/oder eines Kurvenlichts und/oder eines Fernlichts und/oder eines Teilfernlichts beleuchtet wird und/oder eine hochaufgelöste Projektion bereitgestellt wird.

Ferner wird insbesondere ein Verfahren zum Betreiben einer Beleuchtungsanordnung für ein Fahrzeug zur Verfügung gestellt, umfassend: Betreiben von zwei Scheinwerfern mittels einer Steuereinrichtung, wobei jeder der Scheinwerfer als Lichtquellen zur Erzeugung einer Abblend- und/oder Fernlichtverteilung ausschließlich je ein hochaufgelöstes Lichtmodul mit in einem Raster angeordneten Lichtpunkten und je ein Zusatz-Lichtmodul mit ausschließlich ein, zwei oder drei Lichtelementen umfasst, wobei die Lichtelemente jeweils ausschließlich als Ganzes ansteuerbar sind, wobei jedes der Lichtelemente und jedes der hochaufgelösten Lichtmodule dazu eingerichtet ist, einen jeweils vorgegebenen Ausleuchtbereich vor der Beleuchtungsanordnung zu beleuchten, wobei ein jeweils erstes der Lichtelemente dazu eingerichtet ist, den Ausleuchtbereich eines Abblendlichts zu beleuchten, und wobei die Lichtelemente und/oder die Lichtpunkte je nach einem Betriebszustand einzeln und/oder gruppenweise angesteuert werden, sodass der jeweilige Ausleuchtbereich eines Abblendlichts und/oder eines Kurvenlichts und/oder eines Fernlichts und/oder eines Teilfernlichts beleuchtet wird und/oder eine hochaufgelöste Projektion bereitgestellt wird.

Die Beleuchtungsanordnung und das Verfahren ermöglichen es, verschiedene Lichtfunktionen durch die Scheinwerfer bereitzustellen und gleichzeitig die Kosten der Beleuchtungsanordnung im Vergleich zum Stand der Technik zu senken. Die Beleuchtungsanordnung umfasst zwei Scheinwerfer und eine Steuereinrichtung. Die Scheinwerfer umfassen je ein hochaufgelöstes Lichtmodul und ein Zusatz-Lichtmodul. Die Scheinwerfer können weitere Lichtquellen umfassen, welche jedoch nicht zur Erzeugung einer Abblend- und/oder Fernlichtverteilung beitragen. Das hochaufgelöste Lichtmodul umfasst in einem Raster angeordnete, einzeln und/oder gruppenweise ansteuerbare Lichtpunkte. Das Zusatz-Lichtmodul umfasst ausschließlich ein, zwei oder drei Lichtelemente. Die Lichtelemente sind jeweils ausschließlich als Ganzes ansteuerbar. Jedes der Lichtelemente und jedes der hochaufgelösten Lichtmodule ist dazu eingerichtet, einen jeweils vorgegebenen Ausleuchtbereich vor der Beleuchtungsanordnung zu beleuchten. Ein erstes der Lichtelemente ist dazu eingerichtet, den Ausleuchtbereich eines Abblendlichts zu beleuchten. Die Steuereinrichtung steuert die Lichtpunkte und/oder die Lichtelemente in Abhängigkeit eines Betriebszustands an. Dadurch wird je nach Betriebszustand ein vorgegebener Ausleuchtbereich eines Abblendlichts und/oder eines Kurvenlichts und/oder eines Fernlichts und/oder eines Teilfernlichts beleuchtet und/oder eine hochaufgelöste Projektion bereitgestellt.

Eine Grundidee der Erfindung ist es, in jedem der Scheinwerfer jeweils ein hochaufgelöstes Lichtmodul vorzusehen und eine darüber hinausgehende Anzahl von zusätzlichen Lichtquellen zu reduzieren. In jedem der Scheinwerfer ist zusätzlich zum hochaufgelösten Lichtmodul ein Zusatz-Lichtmodul vorgesehen. Das hochaufgelöste Lichtmodul und das Zusatzlichtmodul sind dazu eingerichtet, zusammen eine Abblend- und/oder Fernlichtverteilung zu erzeugen. Die Scheinwerfer umfassen keine weiteren Lichtquellen, welche zur Erzeugung einer Abblend- und/oder Fernlichtverteilung beitragen. Das Zusatz-Lichtmodul umfasst ein, zwei oder drei Lichtelemente, welche ausschließlich als Ganzes ansteuerbar sind. Das Zusatz-Lichtmodul ist demnach technisch einfacher aufgebaut als vergleichbare Lichtquellen aus dem Stand der Technik, da es maximal drei Lichtelemente aufweist, welche ausschließlich als Ganzes ansteuerbar sind. Dadurch können insbesondere Kosten gesenkt werden. Durch gezieltes Ansteuern der Scheinwerfer ist es trotz des vereinfachten Aufbaus möglich, insbesondere alle vorgegebenen Ausleuchtbereiche zu beleuchten. Insbesondere wird eine benötigte Lichtstärke durch Ansteuern der Lichtmodule in allen Ausleuchtbereichen bereitgestellt. Dadurch kann trotz gesenkten Kosten eine große Vielfalt von Lichtfunktionen bereitgestellt werden. Ferner wird insbesondere durch die hochaufgelösten Lichtmodule ein gezieltes Aussparen (Maskieren) bestimmter Bereiche aus einem Lichtbild ermöglicht.

Die Beleuchtungsanordnung ist dazu vorgesehen, in einem Fahrzeug, insbesondere einem Kraftfahrzeug, eingesetzt zu werden.

Die Beleuchtungsanordnung umfasst zwei Scheinwerfer. Ein Scheinwerfer ist insbesondere eine Leuchte, welche Licht insbesondere in einer Hauptbeleuchtungsrichtung bereitstellt. Als Lichtquellen umfasst jeder Scheinwerfer zwei Lichtmodule. Die Lichtquellen stellen insbesondere ein für eine Erfüllung von vorgegebenen Lichtfunktionen benötigtes Licht bereit. Die Lichtquellen sind insbesondere Lichtmodule oder Teile eines Lichtmoduls, beispielsweise ein Lichtelement. Die Scheinwerfer sind insbesondere an einer Fahrzeugvorderseite angeordnet. Ferner ist einer der Scheinwerfer insbesondere an einer linken Seite der Fahrzeugvorderseite und ein anderer der Scheinwerfer an einer rechten Seite der Fahrzeugvorderseite angeordnet.

Jeder der Scheinwerfer umfasst als Lichtquelle ein hochaufgelöstes Lichtmodul. Das hochaufgelöste Lichtmodul umfasst eine Vielzahl von Lichtpunkten. Insbesondere umfasst das hochaufgelöste Lichtmodul mehr als 1000 Lichtpunkte, bevorzugt insbesondere mehr als 4000 Lichtpunkte. Die Lichtpunkte sind einzeln oder gruppenweise ansteuerbar. Die Lichtpunkte sind in einem Raster angeordnet. Insbesondere können die Lichtpunkte mittels Spiegeln einer Mikrospiegelaktor-Anordnung (englisch Digital Micromirror Device, DMD), mittels Pixeln einer Flüssigkristallmatrix (englisch liquid-crystal display, LCD) oder mittels Leuchtdioden (LED), insbesondere mittels mikropixelierten LEDs oder Mikro-LEDs, bereitgestellt werden.

Ferner umfasst jeder der Scheinwerfer als Lichtquelle ein Zusatz-Lichtmodul. Das Zusatz-Lichtmodul umfasst als Lichtquellen ausschließlich ein, zwei oder drei Lichtelemente. Ein erstes der Lichtelemente ist dazu eingerichtet, einen Ausleuchtbereich eines Abblendlichts zu beleuchten. Insbesondere umfasst jedes Lichtelement mindestens eine Leuchtdiode und/oder mindestens eine Halogenlampe.

Insbesondere kann vorgesehen sein, dass die Scheinwerfer weitere Lichtquellen umfassen, welche nicht zur Erzeugung einer Abblend- und/oder Fernlichtverteilung beitragen, beispielsweise ein Abbiegelicht-Modul.

Ein Ausleuchtbereich ist insbesondere ein Raumwinkel oder eine Menge von Raumwinkeln vor der Beleuchtungsanordnung. Insbesondere wird der Ausleuchtbereich von mindestens einer Lichtquelle beleuchtet oder mindestens eine Lichtquelle ist dazu eingerichtet, den Ausleuchtbereich zu beleuchten. Insbesondere ist der Ausleuchtbereich einer Lichtquelle derjenige Raumwinkel, welcher von der Lichtquelle beleuchtet wird, wenn alle ansteuerbaren Teile der Lichtquelle aktiv sind. Insbesondere ist der Ausleuchtbereich einer Lichtfunktion der vorgesehene Raumwinkel, welcher zur Erfüllung der Lichtfunktion beleuchtet sein muss. Eine Lichtfunktion kann mehrere Teil-Lichtfunktionen umfassen, welche zusammen eine Gesamtlichtverteilung bereitstellen. Durch ein Ansteuern der Lichtelemente und/oder Lichtpunkte je nach einem Betriebszustand, kann ein vorgegebener Ausleuchtbereich oder ein Teilbereich hiervon beleuchtet werden. Insbesondere können dadurch verschiedene Lichtfunktionen ermöglicht werden. Insbesondere kann durch ein Deaktivieren bestimmter Lichtpunkte und/oder Lichtelemente ein Raumwinkelbereich unbeleuchtet bleiben, selbst wenn er von beleuchteten Bereichen umgeben ist. Dadurch können insbesondere maskierte Lichtfunktionen bereitgestellt werden. Insbesondere kann durch ein gezieltes Ansteuern der Lichtpunkte der Ausleuchtbereich derart geändert werden, dass ein Unterschied zum vorherigen Betriebszustand für ein menschliches Sehvermögen nicht oder nur schwer wahrnehmbar ist. Dadurch kann insbesondere eine kontinuierliche Veränderung des Ausleuchtbereichs ermöglicht werden. Hierdurch können insbesondere dynamische Lichtfunktionen bereitgestellt werden.

Ein Betriebszustand korrespondiert hierbei insbesondere mit einer Bereitstellung einer Lichtfunktion oder einer Kombination von mehreren Teil-Lichtfunktionen. Insbesondere wird durch den Betriebszustand für jeden ansteuerbaren Bestandteil der Lichtquellen ein Ansteuerparameter vorgegeben, welcher mit einem jeweiligen Helligkeitswert des ansteuerbaren Bestandteils korrespondiert. Insbesondere ist hierfür für jeden Betriebszustand ein Satz von Ansteuerparametern hinterlegt, insbesondere in der Steuereinrichtung, und kann gemäß dem gewünschten Betriebszustand abgerufen werden.

Ein Abblendlicht ist insbesondere eine Lichtfunktion, welche einen Bereich direkt vor der Beleuchtungsanordnung beleuchtet. Insbesondere dient das Abblendlicht zur Beleuchtung einer Fahrbahn vor einem Fahrzeug, in welchem die Beleuchtungsanordnung verbaut ist. Der Ausleuchtbereich des Abblendlichts liegt insbesondere unterhalb einer horizontalen Ebene durch mindestens einen der Scheinwerfer. Insbesondere liegt der Ausleuchtbereich des Abblendlichts unterhalb einer vorgegebenen Hell-Dunkel-Grenze. Die Hell-Dunkel-Grenze ist insbesondere eine vorgegebene Grenze, oberhalb derer eine Blendung anderer Verkehrsteilnehmer vermieden wird. Ein Vorfeld ist insbesondere ein Teil des Abblendlichts, welcher unterhalb der Hell-Dunkel-Grenze liegt.

Ein Kurvenlicht ist insbesondere eine Lichtfunktion, welche einen Bereich schräg vor der Beleuchtungsanordnung beleuchtet. Insbesondere beleuchtet das Kurvenlicht eine Fahrbahn schräg vor einem Fahrzeug, in welchem die Beleuchtungsanordnung verbaut ist. Insbesondere vergrößert das Kurvenlicht ein beleuchtetes Sichtfeld in einer Kurvenbewegung des Fahrzeugs in Richtung einer Kurvenkrümmung. Das Kurvenlicht kann insbesondere ein dynamisches oder ein statisches Kurvenlicht sein.

Ein Fernlicht ist insbesondere eine Lichtfunktion, welche einen Bereich vor der Beleuchtungsanordnung beleuchtet. Insbesondere dient das Fernlicht dazu, eine Sicht eines Fahrers über eine Distanz, welche den Ausleuchtbereich des Abblendlichts übersteigt, zu verbessern. Insbesondere dient das Fernlicht der Beleuchtung der Fahrbahn und/oder von Verkehrszeichen. Insbesondere wird das Fernlicht ausschließlich durch die hochaufgelösten Lichtmodule oder durch die hochaufgelösten Lichtmodule zusammen mit den zweiten Lichtelementen der Zusatz-Lichtmodule bereitgestellt. Die Ausleuchtbereiche der hochaufgelösten Lichtmodule und die Ausleuchtbereiche der gegebenenfalls vorgesehenen zweiten Lichtelemente der Zusatz-Lichtmodule stellen insbesondere zumindest einen Teilbereich des Ausleuchtbereichs des Fernlichts bereit. Der Ausleuchtbereich des Fernlichts liegt insbesondere zumindest teilweise oberhalb der Hell-Dunkel-Grenze. Insbesondere kann das Fernlicht durch Ansteuern der Lichtpunkte derart maskiert sein, dass nur ein vorgegebener Bereich im Ausleuchtbereich des Fernlichts beleuchtet wird, während ein anderer vorgegebener Bereich im Ausleuchtbereich des Fernlichts maskiert wird. Dadurch kann insbesondere ein Blenden anderer Verkehrsteilnehmer verhindert werden, ohne das Fernlicht zu deaktivieren und ohne ein beleuchtetes Sichtfeld eines Fahrers maßgeblich zu verkleinern. Insbesondere kann dadurch ein Teilfernlicht (auch blendfreies Fernlicht, Dauerfernlicht oder maskiertes Fernlicht) bereitgestellt werden. Insbesondere werden hierzu entgegenkommende und/oder vorausfahrende Fahrzeuge durch mindestens einen Sensor und/oder mindestens eine Kamera erkannt und die entsprechenden Ausleuchtbereiche, welche zu einem Blenden dieser Fahrzeuge führen würden, automatisch durch die Steuereinrichtung maskiert.

Eine hochaufgelöste Projektion ist insbesondere eine Lichtfunktion, durch welche ein Lichtbild mit hoher Auslösung auf einem Bereich vor der Beleuchtungsanordnung bereitgestellt wird, insbesondere auf einen horizontalen Bereich, beispielsweise eine Straße vor dem Fahrzeug. Insbesondere können durch die hochaufgelöste Projektion Strukturen und/oder Symbole, beispielsweise Hinweise oder Warnmeldungen, auf der Fahrbahn bereitgestellt werden.

Teile der Beleuchtungsanordnung, insbesondere die Steuereinrichtung, können einzeln oder zusammengefasst als eine Kombination von Hardware und Software ausgebildet sein, beispielsweise als Programmcode, der auf einer Recheneinrichtung, insbesondere einem Mikrocontroller oder Mikroprozessor, ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die Steuereinrichtung kann insbesondere mindestens eine Recheneinrichtung und mindestens einen Speicher umfassen.

In einer Ausführungsform ist vorgesehen, dass ein zweites der Lichtelemente des Zusatz-Lichtmoduls dazu eingerichtet ist, einen Ausleuchtbereich eines Fernlichts zu beleuchten. Insbesondere kann dadurch eine Lichtstärke des Fernlichts erhöht werden oder ein Teil der Lichtstärke des Fernlichts von dem zweiten Lichtelement bereitgestellt werden.

In einer Ausführungsform ist vorgesehen, dass ein drittes der Lichtelemente des Zusatz-Lichtmoduls dazu eingerichtet ist, zusammen mit dem ersten der Lichtelemente den Ausleuchtbereich des Abblendlichts zu beleuchten, wobei das dritte der Lichtelemente dazu eingerichtet ist, einen zentralen Bereich eines Vorfelds zu beleuchten. Insbesondere kann dadurch eine segmentierte Lichtverteilung im Vorfeld bereitgestellt werden. Insbesondere kann ein drittes Lichtelement auch dann vorgesehen sein, wenn kein zweites Lichtelement vorhanden ist.

In einer Ausführungsform ist vorgesehen, dass der Ausleuchtbereich des zweiten Lichtelements des Zusatz-Lichtmoduls größer ist als der Ausleuchtbereich des hochaufgelösten Lichtmoduls. Insbesondere kann dadurch eine vorgegebene Lichtstärke des Fernlichts bereitgestellt werden, selbst wenn ein Ausleuchtbereich des hochaufgelösten Lichtmoduls kleiner ist als ein Ausleuchtbereich des Fernlichts. Insbesondere kann ein Teil des Fernlichts, welcher außerhalb des Ausleuchtbereichs des hochaufgelösten Lichtmoduls liegt, durch das Zusatz-Lichtmodul bereitgestellt werden. Durch einen kleineren Ausleuchtbereich des hochaufgelösten Lichtmoduls wird ferner insbesondere eine Lichtleistung auf eine kleineren Raumwinkel verteilt. Dadurch kann insbesondere eine Lichtstärke eines entstehenden Lichtbilds des hochaufgelösten Lichtmoduls vergrößert werden. Insbesondere kann dadurch ein Kontrast und/oder eine Auflösung des entstehenden Lichtbilds vergrößert werden.

In einer Ausführungsform ist vorgesehen, dass das hochaufgelöste Lichtmodul dazu eingerichtet ist, einen Ausleuchtbereich zu beleuchten, welcher einen horizontalen Öffnungswinkel von mindestens 30° und einen vertikalen Öffnungswinkel von mindestens 8° aufweist. Insbesondere kann hierdurch der Ausleuchtbereich des Fernlichts zu einem großen Teil vom hochaufgelösten Lichtmodul beleuchtet werden. Dadurch kann insbesondere ein maskierbarer Bereich vergrößert werden.

In einer Ausführungsform ist vorgesehen, dass das hochaufgelöste Lichtmodul dazu eingerichtet ist, mindestens einen Ausleuchtbereich zu beleuchten, welcher sich von -3,5° bis +5° in Bezug auf eine Horizontalebene erstreckt. Insbesondere kann durch einen Anteil des Ausleuchtbereichs oberhalb der Horizontalebene der Ausleuchtbereich des Fernlichts zu einem großen Teil vom hochaufgelösten Lichtmodul beleuchtet werden. Durch einen Anteil des Ausleuchtbereichs unterhalb der Horizontalebene kann ferner insbesondere eine hochaufgelöste Projektion bereitgestellt werden und/oder ein Teilbereich des Ausleuchtbereichs eines Abblendlicht beleuchtet werden.

In einer Ausführungsform ist vorgesehen, dass das hochaufgelöste Lichtmodul dazu eingerichtet ist, einen Ausleuchtbereich zu beleuchten, welcher einen horizontalen Öffnungswinkel von mindestens 40° und einen vertikalen Öffnungswinkel von mindestens 10° aufweist. Insbesondere kann hierdurch der Ausleuchtbereich des Fernlichts vollständig vom hochauflösenden Lichtmodul beleuchtet werden.

In einer Ausführungsform ist vorgesehen, dass die jeweiligen hochaufgelösten Lichtmodule und die jeweiligen zweiten Lichtelemente der Zusatz-Lichtmodule der Scheinwerfer dazu eingerichtet sind, jeweils anteilig zusammen ein Fernlicht mit einer vorgegebenen Mindestlichtstärke bereitzustellen. Dadurch kann insbesondere eine gesetzliche Vorgabe für eine Helligkeit eines Fernlichts eingehalten werden. Insbesondere ist vorgesehen, dass eine Mindestlichtstärke von 40000 cd bereitgestellt wird. Insbesondere ist ferner vorgesehen, dass die hochaufgelösten Lichtmodule dazu eingerichtet sind, in einem Betriebszustand, in dem alle Lichtpunkte und Lichtelemente aktiv sind, einen Anteil von zumindest 50% einer Lichtstärke des Fernlichts bereitzustellen.

In einer Ausführungsform ist vorgesehen, dass die jeweiligen hochaufgelösten Lichtmodule dazu eingerichtet sind, zusammen ein Fernlicht mit einer vorgegebenen Mindestlichtstärke bereitzustellen. Insbesondere kann dadurch eine gesetzliche Vorgabe für eine Helligkeit eines Fernlichts auch in denjenigen Ausführungsformen eingehalten werden, in denen kein zweites Lichtelement des Zusatz-Lichtmoduls vorgesehen ist. Insbesondere ist vorgesehen, dass eine Mindestlichtstärke von 40000 cd bereitgestellt wird.

In einer Ausführungsform ist vorgesehen, dass das zweite Lichtelement des Zusatz-Lichtmoduls mindestens eines der Scheinwerfer dazu eingerichtet ist, einen Ausleuchtbereich zu beleuchten, welcher horizontal asymmetrisch in Bezug auf eine horizontale Hauptbeleuchtungsrichtung der Beleuchtungsanordnung ist. Insbesondere kann der Ausleuchtbereich des zweiten Lichtelements dadurch in Richtung einer Seite der Beleuchtungsanordnung verschoben sein. Insbesondere kann hierdurch der Ausleuchtbereich bei einer vorgegebenen Größe auch solche Bereiche umfassen, die weiter von der Hauptbeleuchtungsrichtung entfernt sind, als dies bei einem symmetrischen Ausleuchtbereich der Fall wäre. Insbesondere kann der Ausleuchtbereich des zweiten Lichtelements dadurch besser an eine vorgegebene Lichtfunktion angepasst sein.

In einer Ausführungsform ist vorgesehen, dass der jeweilige Ausleuchtbereich des zweiten Lichtelements des Zusatz-Lichtmoduls mindestens eines der Scheinwerfer im Vergleich zu einem symmetrischen Ausleuchtbereich zu einer Außenseite der Beleuchtungsanordnung hin verschoben ist. Insbesondere kann hierdurch eine Überlappung zwischen den Ausleuchtbereichen der Scheinwerfer verkleinert werden. Hierdurch kann insbesondere ein gesamter Ausleuchtbereich der Beleuchtungsanordnung vergrößert werden.

In einer Ausführungsform ist vorgesehen, dass das hochaufgelöste Lichtmodul mindestens eines der Scheinwerfer dazu eingerichtet ist, einen Ausleuchtbereich zu beleuchten, welcher horizontal asymmetrisch in Bezug auf eine horizontale Hauptbeleuchtungsrichtung der Beleuchtungsanordnung ist. Insbesondere kann der Ausleuchtbereich des hochaufgelösten Lichtmoduls dadurch in Richtung einer Seite der Beleuchtungsanordnung verschoben sein. Insbesondere kann hierdurch der Ausleuchtbereich bei einer vorgegebenen Größe auch solche Bereiche umfassen, die weiter von der Hauptbeleuchtungsrichtung entfernt sind, als dies bei einem symmetrischen Ausleuchtbereich der Fall wäre. Insbesondere kann der Ausleuchtbereich des hochaufgelösten Lichtmoduls dadurch besser an eine vorgegebene Lichtfunktion angepasst sein.

In einer weiteren Ausführungsform ist vorgesehen, dass der Ausleuchtbereich des zweiten Lichtelements des Zusatz-Lichtmoduls kleiner ist als der Ausleuchtbereich des hochaufgelösten Lichtmoduls, wobei der Ausleuchtbereich des zweiten Lichtelements des Zusatz-Lichtmoduls zu einer Seite der Beleuchtungsanordnung hin verschoben ist. Hierdurch kann insbesondere ein gesamter Ausleuchtbereich der Beleuchtungsanordnung vergrößert werden. Insbesondere wird dadurch ein Bereich verkleinert, in dem der Ausleuchtbereich der hochaufgelösten Lichtquelle mit dem Ausleuchtbereich des zweiten Lichtelements der Zusatzlichtquelle überlappt. Hierdurch kann ein maskierbarer Bereich der Beleuchtungsanordnung vergrößert werden, insbesondere in der Hauptbeleuchtungsrichtung.

In einer Ausführungsform ist vorgesehen, dass das hochaufgelöste Lichtmodul und das Zusatz-Lichtmodul dazu eingerichtet sind, in mindestens einem Betriebszustand ein Fernlicht bereitzustellen, wobei eine bereitgestellte Gesamtlichtverteilung des Betriebszustands an einer Grenze zwischen dem Ausleuchtbereich des hochaufgelösten Lichtmoduls und des Zusatz-Lichtmoduls eine vorgegebene Lichtstärkedifferenz nicht übersteigt. Insbesondere ist dadurch für ein menschliches Sehvermögen keine Grenze zwischen dem Ausleuchtbereich des Fernlichts und dem Ausleuchtbereich des Abblendlichts wahrnehmbar. Ist die Beleuchtungsanordnung in einem Fahrzeug angeordnet, kann dadurch insbesondere eine Sicht des Fahrers verbessert werden.

Ferner wird insbesondere ein Fahrzeug geschaffen, umfassend mindestens eine Beleuchtungsanordnung nach einer der beschriebenen Ausführungsformen. Insbesondere ist das Fahrzeug ein Kraftfahrzeug, beispielsweise ein Personenkraftwagen oder ein Lastkraftwagen.

Weitere Merkmale zur Ausgestaltung des Verfahrens ergeben sich aus der Beschreibung von Ausgestaltungen der Beleuchtungsanordnung. Die Vorteile des Verfahrens sind hierbei jeweils die gleichen wie bei den Ausgestaltungen der Beleuchtungsanordnung.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Ausführungsformen der Beleuchtungsanordnung;
- Fig. 2: eine schematische Darstellung von Ausführungsformen der Beleuchtungsanordnung;
- Fig. 3: eine schematische Darstellung einer Ausführungsform der Beleuchtungsanordnung;
- Fig. 4: eine schematische Darstellung einer Ausführungsform der Beleuchtungsanordnung;
- Fig. 5: eine schematische Darstellung einer entstehenden Lichtverteilung einer symmetrischen Ausführungsform eines Scheinwerfers in einem Betriebszustand, in welchem alle Lichtpunkte des hochaufgelösten Lichtmoduls aktiv sind;
- Fig. 6: eine schematische Darstellung einer entstehenden Lichtverteilung einer asymmetrischen Ausführungsform eines Scheinwerfers in einem Betriebszustand, in welchem alle Lichtpunkte des hochaufgelösten Lichtmoduls aktiv sind;
- Fig. 7: ein schematisches Ablaufdiagramm einer Ausführungsform des Verfahrens.

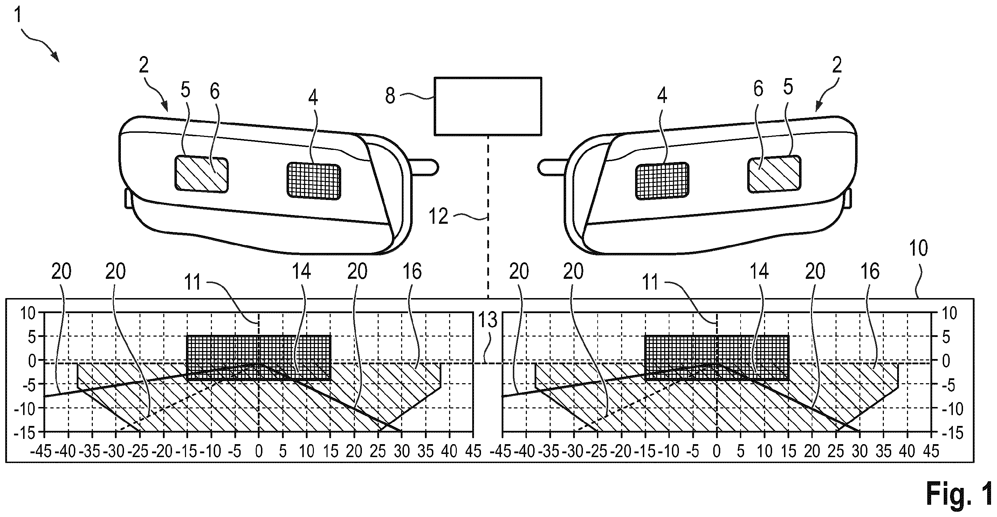

Die Fig. 1 zeigt eine schematische Darstellung von Ausführungsformen der Beleuchtungsanordnung 1. Im unteren Bereich der Fig. 1 ist eine Lichtverteilung 10 aus einer Perspektive der jeweiligen Scheinwerfer 2 dargestellt, welche sich auf einer vertikalen Ebene vor dem jeweiligen Scheinwerfer 2 ergibt, wobei die Ebene senkrecht zu einer Mittelebene 12 zwischen den Scheinwerfern 2 steht. Mit anderen Worten ist für jeden Scheinwerfer 2 eine Lichtverteilung dargestellt, wie sie auf einer Wand vor der Beleuchtungsanordnung abgebildet werden würde, wenn alle Lichtquellen aktiv sind. Da eine Größe der Lichtverteilung in allen Richtungen mit einem Abstand zum Scheinwerfer 2 skaliert, beschränkt sich die Darstellung auf Winkelangaben in Bezug auf eine horizontale Hauptbeleuchtungsrichtung 11, welche insbesondere parallel zur Mittelebene 12 und durch den jeweiligen Scheinwerfer verläuft, und eine Horizontalebene (bei 0°), welche durch die Scheinwerfer 2 verläuft. Die horizontale Hauptbeleuchtungsrichtung 11 ist insbesondere ein horizontaler Richtungsanteil einer Fahrzeuglängsachse eines Fahrzeugs, welches die Beleuchtungsanordnung 1 umfasst. Insbesondere beträgt ein Horizontalwinkel zwischen der horizontalen Hauptbeleuchtungsrichtung 11 und der Mittelebene 12 0°. Ferner sind aus einer Perspektive des jeweiligen Scheinwerfers 2 schematisch Fahrspurbegrenzungen 20 einer Fahrspur dargestellt, welche von einem Fahrzeug befahrenen wird, in welchem die Beleuchtungsanordnung 1 angeordnet ist. Entsprechend ist auch eine Fahrspurbegrenzung 20 einer linksseitig an die befahrene Fahrspur angrenzenden Fahrspur aus der Perspektive des jeweiligen Scheinwerfers 2 dargestellt.

Die Beleuchtungsanordnung 1 umfasst zwei Scheinwerfer 2 und eine Steuereinrichtung 8. Die Scheinwerfer 2 umfassen je ein hochaufgelöstes Lichtmodul 4 und ein Zusatz-Lichtmodul 5. Das hochaufgelöste Lichtmodul 4 umfasst in einem Raster angeordnete, einzeln und/oder gruppenweise ansteuerbare Lichtpunkte. In der dargestellten Ausführungsform umfasst das Zusatz-Lichtmodul 5 ausschließlich ein erstes Lichtelement 6. Das erste Lichtelement 6 ist ausschließlich als Ganzes ansteuerbar. Die Lichtelemente 6 und die hochaufgelösten Lichtmodule 4 sind dazu eingerichtet, einen jeweils vorgegebenen Ausleuchtbereich 14, 16 vor der Beleuchtungsanordnung 1 zu beleuchten. Das erste Lichtelement 6 ist dazu eingerichtet, den Ausleuchtbereich eines Abblendlichts zu beleuchten.

Die Steuereinrichtung 8 steuert die Lichtpunkte und/oder die Lichtelemente 6 in Abhängigkeit eines Betriebszustands an. Dadurch wird je nach Betriebszustand ein vorgegebener Ausleuchtbereich eines Abblendlichts und/oder eines Kurvenlichts und/oder eines Fernlichts beleuchtet und/oder eine hochaufgelöste Projektion bereitgestellt.

Insbesondere ist vorgesehen, dass der Ausleuchtbereich eines Abblendlichts unterhalb einer Hell-Dunkel-Grenze 13 liegt. Die Hell-Dunkel-Grenze 13 liegt im gezeigten Beispiel insbesondere 1° unterhalb der Horizontalebene. Insbesondere ist vorgesehen, dass der Ausleuchtbereich 16 des ersten Lichtelements 6 an der Hell-Dunkel-Grenze 13 einen horizontalen Bereich umfasst, welcher sich von -38° bis +38° in Bezug auf die horizontale Hauptbeleuchtungsrichtung 11 erstreckt. Ferner ist insbesondere vorgesehen, dass der Ausleuchtbereich 16 des ersten Lichtelements 6 einen vertikalen Bereich umfasst, welcher sich von der Hell-Dunkel-Grenze 13 bis -15° unterhalb der Horizontalebene erstreckt. Insbesondere ist vorgesehen, dass der Ausleuchtbereich 16 des ersten Lichtelements 6 an einer unteren Seite nach außen hin abgewinkelt ist, sodass sich insbesondere eine sechseckige Form ergibt.

Ferner ist insbesondere vorgesehen, dass der Ausleuchtbereich 14 des hochaufgelösten Lichtmoduls 4 einen horizontalen Öffnungswinkel von mindestens 30° (von -15° bis +15°) und einen vertikalen Öffnungswinkel von mindestens 8° aufweist.

In einer Ausführungsform ist insbesondere vorgesehen, dass sich der Ausleuchtbereich 14 des hochaufgelösten Lichtmoduls 4 von -3,5° bis +5° in Bezug auf eine Horizontalebene erstreckt.

In einer weiteren Ausführungsform ist ferner vorgesehen, dass die jeweiligen hochaufgelösten Lichtmodule 4 dazu eingerichtet sind, zusammen ein Fernlicht mit einer vorgegebenen Mindestlichtstärke bereitzustellen.

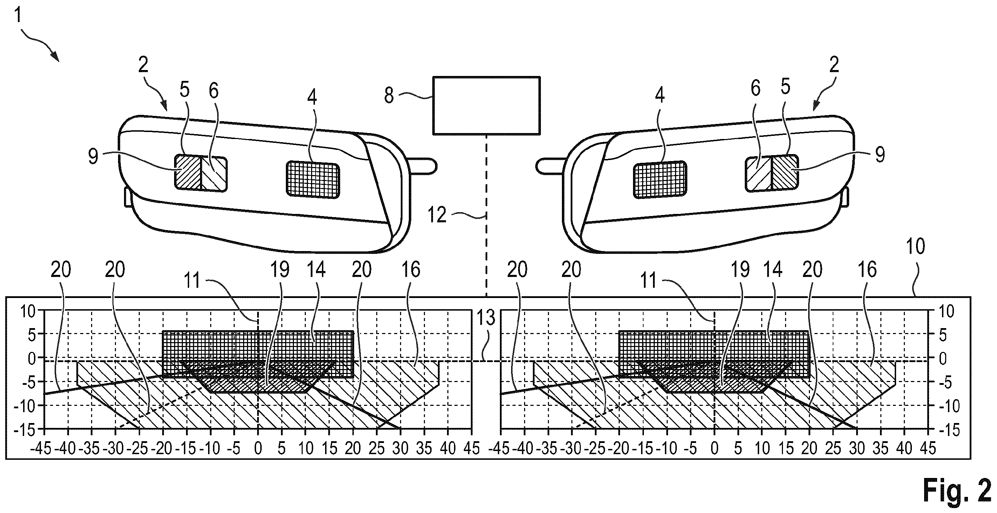

Die Fig. 2 zeigt eine schematische Darstellung von Ausführungsformen der Beleuchtungsanordnung 1. Die Ausführungsformen sind grundsätzlich wie die in der Fig. 1 gezeigte Ausführungsformen ausgebildet. Gleiche Bezugszeichen bezeichnen gleiche Merkmale und Begriffe. In einer der gezeigten Ausführungsformen ist vorgesehen, dass der Ausleuchtbereich 14 des hochaufgelösten Lichtmoduls 4 einen horizontalen Öffnungswinkel von mindestens 40° (von -20° bis +20°) und einen vertikalen Öffnungswinkel von mindestens 10° aufweist.

Ferner umfasst das Zusatz-Lichtmodul in einer weiteren der dargestellten Ausführungsformen ausschließlich ein erstes Lichtelement 6 und ein drittes Lichtelement 9. Das dritte der Lichtelemente 9 des Zusatz-Lichtmoduls 5 ist dazu eingerichtet ist, zusammen mit dem ersten der Lichtelemente 6 den Ausleuchtbereich des Abblendlichts zu beleuchten, wobei das dritte der Lichtelemente 9 dazu eingerichtet ist, einen zentralen Bereich eines Vorfelds zu beleuchten.

Hierzu ist der Ausleuchtbereich 19 des dritten der Lichtelemente 9 an der horizontalen Hauptbeleuchtungsrichtung 11 und an der Hell-Dunkel-Grenze 13 angeordnet.

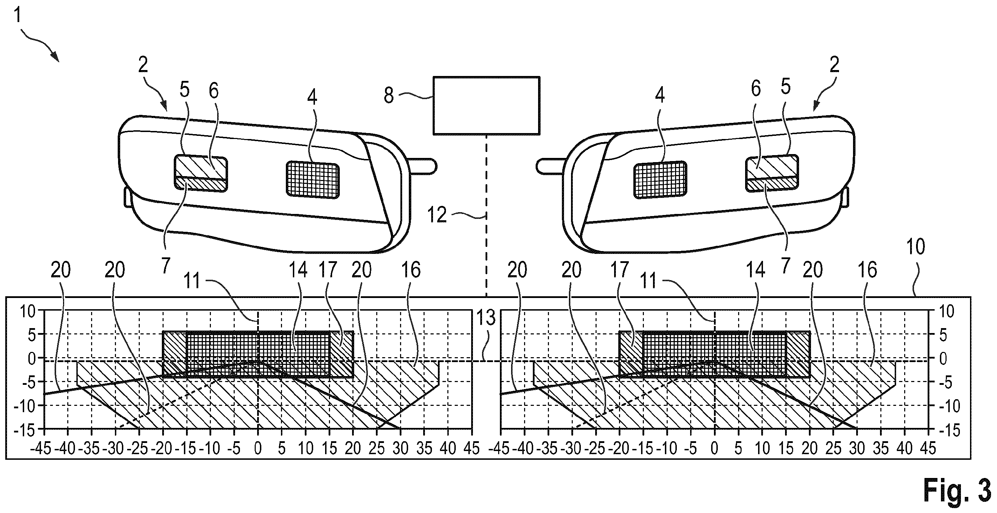

Die Fig. 3 zeigt eine schematische Darstellung einer Ausführungsform der Beleuchtungsanordnung 1. Die Ausführungsform ist grundsätzlich wie die in der Fig. 1 gezeigte Ausführungsform ausgebildet. Gleiche Bezugszeichen bezeichnen gleiche Merkmale und Begriffe. In der dargestellten Ausführungsform umfasst das Zusatz-Lichtmodul 5 ausschließlich zwei Lichtelemente 6, 7. Die Lichtelemente 6, 7 sind jeweils ausschließlich als Ganzes ansteuerbar. Jedes der Lichtelemente 6, 7 und jedes der hochaufgelösten Lichtmodule 4 ist dazu eingerichtet, einen jeweils vorgegebenen Ausleuchtbereich 14-17 vor der Beleuchtungsanordnung 1 zu beleuchten. Das zweite Lichtelement 7 ist dazu eingerichtet, einen Ausleuchtbereich eines Fernlichts zu beleuchten. Insbesondere ist vorgesehen, dass der Ausleuchtbereich 17 des zweiten Lichtelements 7 des Zusatz-Lichtmoduls 5 größer ist als der Ausleuchtbereich 14 des hochaufgelösten Lichtmoduls 4. Ferner ist insbesondere vorgesehen, dass die jeweiligen hochaufgelösten Lichtmodule 4 und die jeweiligen zweiten Lichtelemente 7 der Zusatz-Lichtmodule 5 der Scheinwerfer 2 dazu eingerichtet sind, jeweils anteilig zusammen ein Fernlicht mit einer vorgegebenen Mindestlichtstärke bereitzustellen. Insbesondere ist vorgesehen, dass eine Mindestlichtstärke von 40000 cd bereitgestellt wird. Insbesondere ist ferner vorgesehen, dass die hochaufgelösten Lichtmodule 4 dazu eingerichtet sind, in einem Betriebszustand, in dem alle Lichtpunkte und Lichtelemente 6, 7 aktiv sind, einen Anteil von zumindest 50% der Lichtstärke des Fernlichts bereitzustellen. In der gezeigten Ausführungsform ist vorgesehen, dass der Ausleuchtbereich 17 des zweiten Lichtelements 7 einen horizontalen Öffnungswinkel von mindestens 40° (von -20° bis +20°) und einen vertikalen Öffnungswinkel von mindestens 8° aufweist.

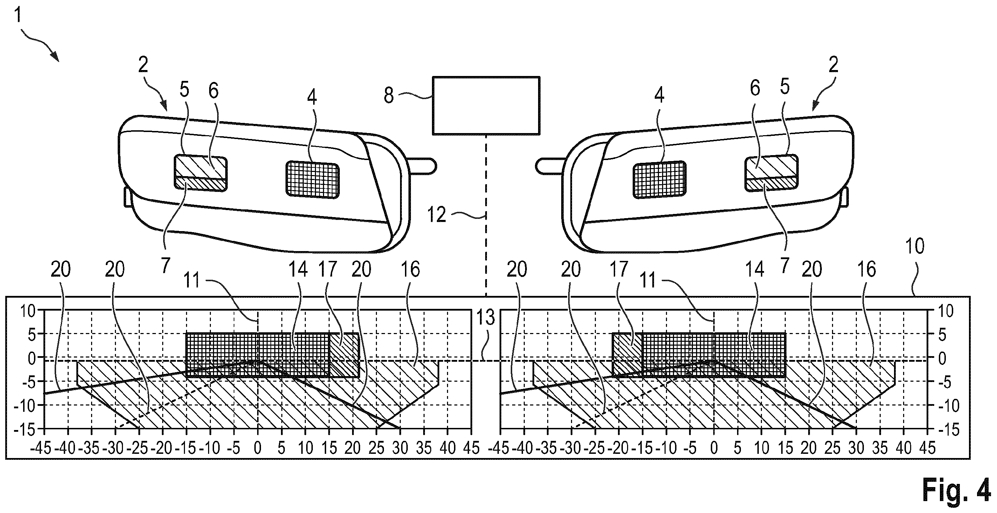

Die Fig. 4 zeigt eine schematische Darstellung einer Ausführungsform der Beleuchtungsanordnung 1. Die Ausführungsform ist grundsätzlich wie die in der Fig. 1 gezeigte Ausführungsform ausgebildet. Gleiche Bezugszeichen bezeichnen gleiche Merkmale und Begriffe. In der gezeigten Ausführungsform ist der Ausleuchtbereich 17 des jeweiligen zweiten Lichtelements 7 der Scheinwerfer 2 horizontal asymmetrisch in Bezug auf die horizontale Hauptbeleuchtungsrichtung 11. Insbesondere ist vorgesehen, dass der jeweilige Ausleuchtbereich 17 des zweiten Lichtelements 7 des Zusatz-Lichtmoduls 5 mindestens eines der Scheinwerfer 2 im Vergleich zu einem symmetrischen Ausleuchtbereich zu einer Außenseite der Beleuchtungsanordnung hin verschoben ist. Insbesondere ist dabei vorgesehen, dass eine äußere Grenze des Ausleuchtbereichs 17 des zweiten Lichtelements 7 um einen Winkel von mindestens 5° weiter in Richtung der Außenseite der Beleuchtungsanordnung 1 angeordnet ist als die äußere Grenze des Ausleuchtbereichs 14 des hochaufgelösten Lichtmoduls 4. In der gezeigten Ausführungsform ist vorgesehen, dass der Ausleuchtbereich 17 des zweiten Lichtelements 7 ein horizontalen Öffnungswinkel von mindestens 7° und einen vertikalen Öffnungswinkel von mindestens 8° aufweist. Insbesondere ist das zweite Lichtelement 7 derart angeordnet, dass keine Lücke zwischen dem Ausleuchtbereich 17 des zweiten Lichtelements 7 und dem Ausleuchtbereich 14 des hochaufgelösten Lichtelements 4 entsteht.

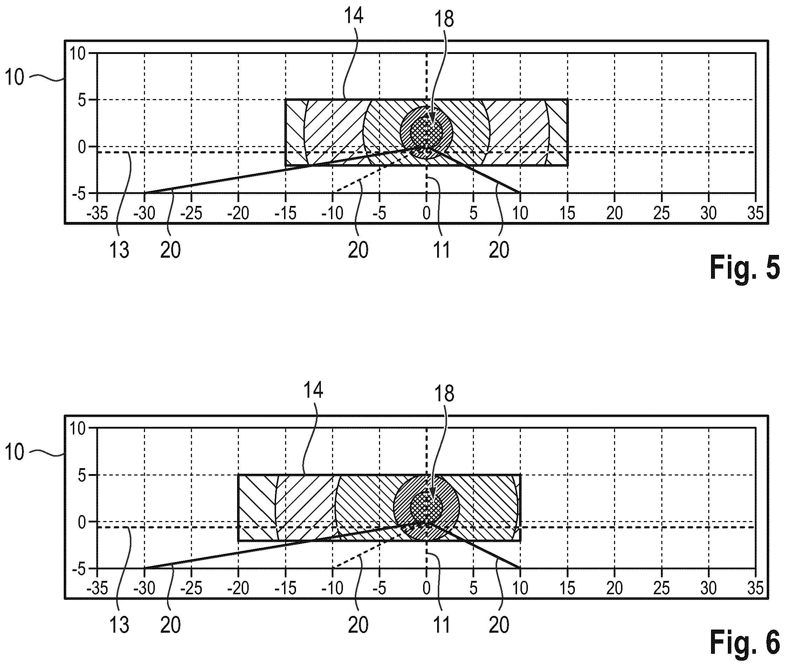

Die Fig. 5 zeigt eine schematische Darstellung einer Lichtverteilung 10 einer symmetrischen Ausführungsform eines Scheinwerfers in einem Betriebszustand, in welchem alle Lichtpunkte des hochaufgelösten Lichtmoduls 4 aktiv sind. Gezeigt ist eine Lichtverteilung 10 der in der Fig. 3 gezeigten Ausführungsform. Für alle Bezugszeichen, deren Merkmale in der Fig. 5 nicht dargestellt sind, sei auf die Fig. 3 verwiesen. In der dargestellten Ausführungsform ist der Ausleuchtbereich 14 des jeweiligen hochaufgelösten Lichtmoduls 4 symmetrisch in Bezug auf die horizontale Hauptbeleuchtungsrichtung 11 der Beleuchtungsanordnung 1. Insbesondere wird im dargestellten Betriebszustand eine Lichtverteilung 10 bereitgestellt, deren Bereich größter Lichtstärke 18 die horizontale Hauptbeleuchtungsrichtung 11 der Beleuchtungsanordnung 1 umfasst.

Die Fig. 6 zeigt eine schematische Darstellung einer Lichtverteilung 10 einer asymmetrischen Ausführungsform eines Scheinwerfers in einem Betriebszustand, in welchem alle Lichtpunkte des hochaufgelösten Lichtmoduls 4 aktiv sind. Für alle Bezugszeichen, deren Merkmale in der Fig. 6 nicht dargestellt sind, sei auf die Fig. 4 verwiesen. In der dargestellten Ausführungsform ist der Ausleuchtbereich 14 des hochaufgelösten Lichtmoduls 4 asymmetrisch in Bezug auf die horizontale Hauptbeleuchtungsrichtung 11 der Beleuchtungsanordnung 1. Insbesondere wird im dargestellten Betriebszustand eine Lichtverteilung 10 bereitgestellt, deren Bereich größter Lichtstärke 18 die horizontale Hauptbeleuchtungsrichtung 11 der Beleuchtungsanordnung 1 umfasst.

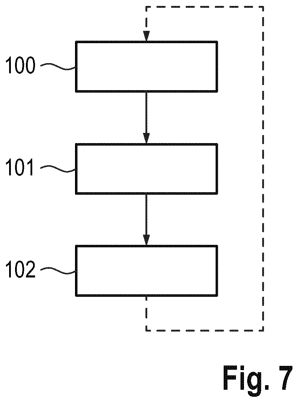

Die Fig. 7 zeigt ein schematisches Ablaufdiagramm einer Ausführungsform des Verfahrens. In einem Verfahrensschritt 100 wird ein Betriebszustand vorgegeben, beispielsweise von einer Fahrzeugsteuerung. In einem Verfahrensschritt 101 werden die Lichtmodule und/oder die Lichtpunkte und/oder die Lichtelemente gemäß dem Betriebszustand einzeln und/oder gruppenweise mittels der Steuereinrichtung angesteuert. Dadurch wird in einem Verfahrensschritt 102 ein vorgegebener Ausleuchtbereich beleuchtet und/oder eine hochaufgelöste Projektion bereitgestellt. Der vorgegebene Ausleuchtbereich kann dabei den jeweiligen Ausleuchtbereich eines Abblendlichts und/oder eines Kurvenlichts und/oder eines Fernlichts umfassen und/oder mit diesem überlappen. Der Prozess wird anschließend erneut durchlaufen. Gegebenenfalls kann dabei ein geänderter Betriebszustand vorgegeben werden, sodass sich auch die Ansteuerung der Lichtmodule und/oder der Lichtpunkte und/oder der Lichtelemente und damit gegebenenfalls auch die entstehende Lichtverteilung ändern.

### Bezugszeichenliste

- 1: Beleuchtungsanordnung
- 2: Scheinwerfer
- 4: hochaufgelöstes Lichtmodul
- 5: Zusatz-Lichtmodul
- 6: erstes Lichtelement
- 7: zweites Lichtelement
- 8: Steuereinrichtung
- 9: drittes Lichtelement
- 10: Lichtverteilung
- 11: horizontale Hauptbeleuchtungsrichtung
- 12: Mittelebene
- 13: Hell-Dunkel-Grenze
- 14: Ausleuchtbereich (des hochaufgelösten Lichtmoduls)
- 16: Ausleuchtbereich (des ersten Lichtelements)
- 17: Ausleuchtbereich (des zweiten Lichtelements)
- 18: Bereich größter Lichtstärke
- 19: Ausleuchtbereich (des dritten Lichtelements)
- 20: Fahrspurbegrenzung
- 100-102: Verfahrensschritte

## Patentansprüche

1. Beleuchtungsanordnung (1) für ein Fahrzeug, umfassend:
- zwei Scheinwerfer (2) und eine Steuereinrichtung (8),
- wobei jeder der Scheinwerfer (2) als Lichtquellen zur Erzeugung einer Abblend- und/oder Fernlichtverteilung ausschließlich je ein hochaufgelöstes Lichtmodul (4) und je ein Zusatz-Lichtmodul (5) umfasst,
- wobei das hochaufgelöste Lichtmodul (4) in einem Raster angeordnete, einzeln und/oder gruppenweise ansteuerbare Lichtpunkte umfasst,
- wobei das Zusatz-Lichtmodul (5) ausschließlich ein, zwei oder drei Lichtelemente (6, 7, 9) umfasst, welche jeweils ausschließlich als Ganzes ansteuerbar sind,
- wobei jedes der Lichtelemente (6, 7, 9) und jedes der hochaufgelösten Lichtmodule (4) dazu eingerichtet ist, einen jeweils vorgegebenen Ausleuchtbereich (14-17) vor der Beleuchtungsanordnung (1) zu beleuchten,
- wobei ein erstes der Lichtelemente (6) dazu eingerichtet ist, den Ausleuchtbereich eines Abblendlichts zu beleuchten, und
- wobei die Steuereinrichtung (8) dazu eingerichtet ist, je nach einem Betriebszustand die Lichtelemente (6, 7, 9) und/oder Lichtpunkte derart anzusteuern, dass der jeweilige Ausleuchtbereich eines Abblendlichts und/oder eines Kurvenlichts und/oder eines Fernlichts und/oder eines Teilfernlichts beleuchtet wird und/oder eine hochaufgelöste Projektion bereitgestellt wird.

2. Beleuchtungsanordnung (1) nach Anspruch 1, **dadurch gekennzeichnet, dass** ein zweites der Lichtelemente (7) des Zusatz-Lichtmoduls (5) dazu eingerichtet ist, einen Ausleuchtbereich eines Fernlichts zu beleuchten.

3. Beleuchtungsanordnung (1) nach Anspruch 1 oder 2, **dadurch gekennzeichnet, dass** ein drittes der Lichtelemente (9) des Zusatz-Lichtmoduls (5) dazu eingerichtet ist, zusammen mit dem ersten der Lichtelemente (6) den Ausleuchtbereich des Abblendlichts zu beleuchten, wobei das dritte der Lichtelemente (9) dazu eingerichtet ist, einen zentralen Bereich eines Vorfelds zu beleuchten.

4. Beleuchtungsanordnung (1) nach einem der vorangegangenen Ansprüche, **dadurch gekennzeichnet, dass** der Ausleuchtbereich (17) des zweiten Lichtelements (7) des Zusatz-Lichtmoduls (5) größer ist als der Ausleuchtbereich (14) des hochaufgelösten Lichtmoduls (4).

5. Beleuchtungsanordnung (1) nach einem der vorangegangenen Ansprüche, **dadurch gekennzeichnet, dass** das hochaufgelöste Lichtmodul (4) dazu eingerichtet ist, einen Ausleuchtbereich (14) zu beleuchten, welcher einen horizontalen Öffnungswinkel von mindestens 30° und einen vertikalen Öffnungswinkel von mindestens 8° aufweist.

6. Beleuchtungsanordnung (1) nach einem der vorangegangenen Ansprüche, **dadurch gekennzeichnet, dass** das hochaufgelöste Lichtmodul (4) dazu eingerichtet ist, mindestens einen Ausleuchtbereich (14) zu beleuchten, welcher sich von -3,5° bis +5° in Bezug auf eine Horizontalebene erstreckt.

7. Beleuchtungsanordnung (1) nach einem der vorangegangenen Ansprüche, **dadurch gekennzeichnet, dass** das hochaufgelöste Lichtmodul (4) dazu eingerichtet sind, einen Ausleuchtbereich (14) zu beleuchten, welcher einen horizontalen Öffnungswinkel von mindestens 40° und einen vertikalen Öffnungswinkel von mindestens 10° aufweist.

8. Beleuchtungsanordnung (1) nach einem der vorangegangenen Ansprüche, **dadurch gekennzeichnet, dass** die jeweiligen hochaufgelösten Lichtmodule (4) und die jeweiligen zweiten Lichtelemente (7) der Zusatz-Lichtmodule (5) der Scheinwerfer (2) dazu eingerichtet sind, jeweils anteilig zusammen ein Fernlicht mit einer vorgegebenen Mindestlichtstärke bereitzustellen.

9. Beleuchtungsanordnung (1) nach einem der vorangegangenen Ansprüche, **dadurch gekennzeichnet, dass** die jeweiligen hochaufgelösten Lichtmodule (4) dazu eingerichtet sind, zusammen ein Fernlicht mit einer vorgegebenen Mindestlichtstärke bereitzustellen.

10. Beleuchtungsanordnung (1) nach einem der vorangegangenen Ansprüche, **dadurch gekennzeichnet, dass** das zweite Lichtelement (7) des Zusatz-Lichtmoduls (5) mindestens eines der Scheinwerfer (2) dazu eingerichtet ist, einen Ausleuchtbereich (17) zu beleuchten, welcher horizontal asymmetrisch in Bezug auf eine horizontale Hauptbeleuchtungsrichtung (11) der Beleuchtungsanordnung (1) ist.

11. Beleuchtungsanordnung (1) nach Anspruch 10, **dadurch gekennzeichnet, dass** der jeweilige Ausleuchtbereich (17) des zweiten Lichtelements (7) des Zusatz-Lichtmoduls (5) mindestens eines der Scheinwerfer (2) im Vergleich zu einem symmetrischen Ausleuchtbereich zu einer Außenseite der Beleuchtungsanordnung (1) hin verschoben ist.

12. Beleuchtungsanordnung (1) nach einem der vorangegangenen Ansprüche, **dadurch gekennzeichnet, dass** das hochaufgelöste Lichtmodul (4) mindestens eines der Scheinwerfer (2) dazu eingerichtet ist, einen Ausleuchtbereich (14) zu beleuchten, welcher horizontal asymmetrisch in Bezug auf eine horizontale Hauptbeleuchtungsrichtung (11) der Beleuchtungsanordnung (1) ist.

13. Beleuchtungsanordnung (1) nach einem der vorangegangenen Ansprüche, **dadurch gekennzeichnet, dass** das hochaufgelöste Lichtmodul (4) und das Zusatz-Lichtmodul (5) dazu eingerichtet sind, in mindestens einem Betriebszustand ein Fernlicht bereitzustellen, wobei eine bereitgestellte Gesamtlichtverteilung des Betriebszustands an einer Grenze zwischen dem Ausleuchtbereich des hochaufgelösten Lichtmoduls (4) und des Zusatz-Lichtmoduls (5) eine vorgegebene Lichtstärkedifferenz nicht übersteigt.

14. Fahrzeug, umfassend eine Beleuchtungsanordnung (1) nach einem der vorangegangenen Ansprüche.

15. Verfahren zum Betreiben einer Beleuchtungsanordnung (1) für ein Fahrzeug, umfassend:
- Betreiben von zwei Scheinwerfern (2) mittels einer Steuereinrichtung (8), wobei jeder der Scheinwerfer (2) als Lichtquellen zur Erzeugung einer Abblend- und/oder Fernlichtverteilung ausschließlich je ein hochaufgelöstes Lichtmodul (4) mit in einem Raster angeordneten Lichtpunkten und je ein Zusatz-Lichtmodul (5) mit ausschließlich ein, zwei oder drei Lichtelementen (6, 7, 9) umfasst,
- wobei die Lichtelemente (6 7, 9) jeweils ausschließlich als Ganzes ansteuerbar sind,
- wobei jedes der Lichtelemente (6, 7, 9) und jedes der hochaufgelösten Lichtmodule (4) dazu eingerichtet ist, einen jeweils vorgegebenen Ausleuchtbereich (14-17) vor der Beleuchtungsanordnung (1) zu beleuchten,
- wobei ein jeweils erstes der Lichtelemente (6) dazu eingerichtet ist, den Ausleuchtbereich eines Abblendlichts zu beleuchten, und
- wobei die Lichtelemente (6, 7, 9) und/oder die Lichtpunkte je nach einem Betriebszustand einzeln und/oder gruppenweise angesteuert werden, sodass der jeweilige Ausleuchtbereich eines Abblendlichts und/oder eines Kurvenlichts und/oder eines Fernlichts und/oder eines Teilfernlichts beleuchtet wird und/oder eine hochaufgelöste Projektion bereitgestellt wird.
